# EUROPEAN PATENT SPECIFICATION

(11) **EP 0 519 709 B1**
(45) Date of publication and mention of the grant of the patent: **18.12.1996**
(21) Application number: 92305566.9
(22) Date of filing: 17.06.1992
(51) Int. Cl.: H01R 43/24

(54) **Electric plug and method for producing an electric plug**
Elektrischen Stecker und Verfahren zur Herstellung eines elektrischen Steckers
Fiche électrique et méthode pour fabriquer une fiche électrique

(30) Priority: 19.06.1991 JP 147340/91
(43) Date of publication of application: 23.12.1992
(73) Proprietor: Sumitomo Wiring Systems, Ltd., Yokkaichi-shi Mie-ken (JP)
(72) Inventor: Ito, Katsuya, Suzuka-shi, Mie-ken (JP); Muta, Junji, Suzuka-shi, Mie-ken (JP)
(74) Representative: Spall, Christopher John

(56) References cited:
- DE-A- 3 731 996
- GB-A- 2 152 301
- US-A- 4 319 800

## Description

This invention relates to a method of producing an electric wire insert in which a resin-molded portion is integrally formed around an outer periphery of an electric wire, and the electric wire insert so formed.

A portion which cannot be formed into a connector due to a limitation of space, or a portion which is required for anticorrosion, water-proofing, dust-proofing, or the like for a terminal is compacted and protected by forming a resin-molded portion around an outer periphery of a terminal-pressed electric wire of the like by means of insert forming.

Such an electric wire insert is produced by setting the electric wire in a split type of mold and injecting a resin material into the mold. In this method of producing the electric wire insert, cracks are caused in the wire due to biting of the split type of mold, molding fins are generated due to resin leak and scars are generated in a wire-fixed portion if the split type of mold is not correctly coupled.

When such faults occur in the molded portion, it is necessary to repeat the step of cutting a terminal and to then carry out further steps.

In addition it is necessary to position the electric wire in the mold by using fins when a curved portion of the wire is formed in the mold. Consequently, it is difficult to carry out an automatic operation of setting the wire in the mold. In addition, pin-draw out holes remained in the resin-molded portion.

One known method, shown in EP-A-0 335 051, overcomes some of these disadvantages. Figures 19 to 25 show a method of producing a vehicle distributor cap in which electric wires are molded into a body. The wires are first mounted on a plate by means of pins, and the free ends are held by a gripping device adjacent the plate. The plate is put into a mold and a first resin portion is formed by a molding process on top of the plate and enveloping the wires. The plate is removed from the first resin portion, in which the pin draw-out holes remain. The first portion is then placed in a further mold, in which it is supported by projections, and from which the end surface from which the free ends of the wires project is exposed. A second resin portion is then formed round the first portion by a second molding process, which fills up the pin draw-out holes. The second molding process can be automated, and does not damage the wires, as the free ends are exposed from the mold. However, in the first mold the wires pass through the edge of the mold, and so may be damaged by the mold.

An object of the present invention is to provide a method for producing an electric wire insert which can overcome the problems mentioned above.

Another object of the present invention is to provide a method of producing an electric wire insert which can prevent defective goods from being produced and improve an efficiency of working operation.
According to a first aspect of the present invention, a method of producing an electric wire insert in which at least one electric wire is located in a primary product with support projections round which is formed a resin-molded secondary portion comprises the steps of forming the primary product with the support projections and a respective through bore adapted to hold each electric wire, the outer end of each bore being in an external surface of the primary product; inserting the or each wire into a respective through bore to hold the wire firmly, with the wire extending from the primary product away from the external surface; setting the primary product and the or each wire into a mold with the external surface containing the outer end of the or each bore being exposed from the mold and with the support projections engaging the mold; and forming the secondary portion by inserting resin into the mold.

In the method of the invention, the electric wire does not come into contact with a mold edge at all, since the wires are inserted into preformed through bores in the primary product, and extend away from the external surface, which is exposed from the mold when the secondary portion is formed.

The step of forming the primary product may include forming a terminal receiving through aperture for location of a terminal of a respective wire and a locking opening for each through aperture, and the method may then include the further step of inserting a terminal of each wire into a respective through aperture in the primary product until it is located by the engagement of a protrusion on the terminal with the locking opening to locate the terminal firmly during forming of the secondary portion. The use of a through aperture means that the terminal can be inserted from either end of the aperture. Terminals with either of two types of protrusion can therefore be used.

According to a second aspect of the present invention, in an electric wire insert comprising at least one electric wire located in a resin-molded body formed by a primary product round which is molded a secondary portion, the primary product has support projections and a respective through bore for each electric wire, each electric wire having been inserted in the preformed respective through bore and being held firmly, the outer end of each through bore, from which the wire extends, being in an external surface of the primary product, the secondary portion having been molded round the primary product excluding the external surface and the or each wire extending from the external surface.

The insert can be made efficiently, and without damage to the electric wires.

Each through bore is dimensioned to hold the respective wire closely, so that it is held firmly for molding of the secondary portion. Preferably, the primary product has a terminal receiving through aperture for location of a terminal of a respective wire. Each aperture may have a locking opening for receiving a protrusion of the terminal, the engagement of the protrusion in the locking opening holding the terminal firmly in the primary product. These features facilitate assembly of the terminal in the primary product, as it may be inserted from either end of the through aperture, and ensures that it is held firmly for molding of the secondary portions.
**FIGURE 1** is a perspective view of a primary product formed in accordance with a method of the present invention;
**FIGURE 2** is a front view taken from an arrow 11 in FIGURE 1;
**FIGURES 3A AND 3B** are perspective views showing a step of mounting a terminal-pressed electric wire on the primary product in Figure 1;
**FIGURES 4A and 4B** are sectional views taken along line ICA-IVA and IVB-IVB of FIGURES 3A and 3B;
FIGURE 5 is a perspective view of a finished resin-molded product which is formed from the primary product into a secondary product; and
FIGURES 6A and 6B are sectional views taken along a line VI-VI in FIGURE 5.

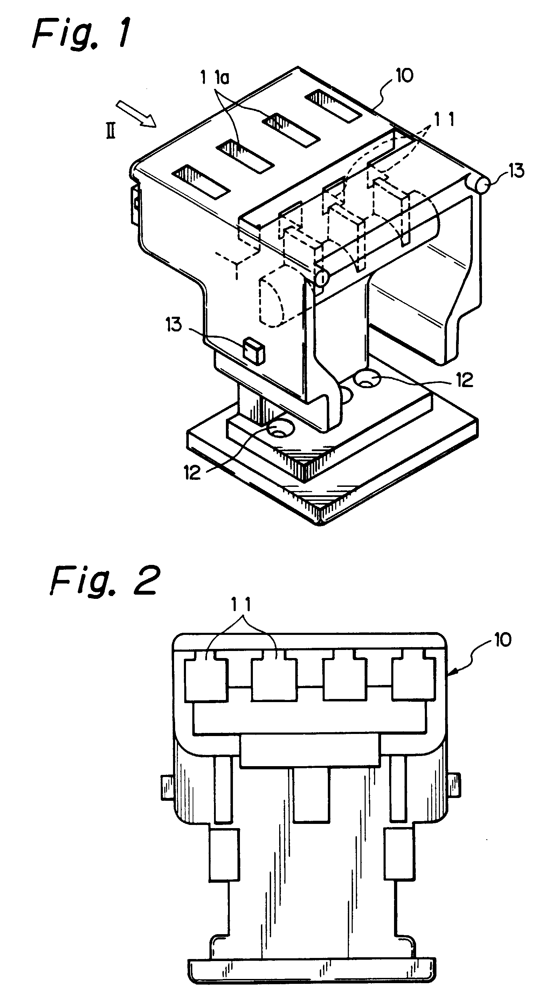

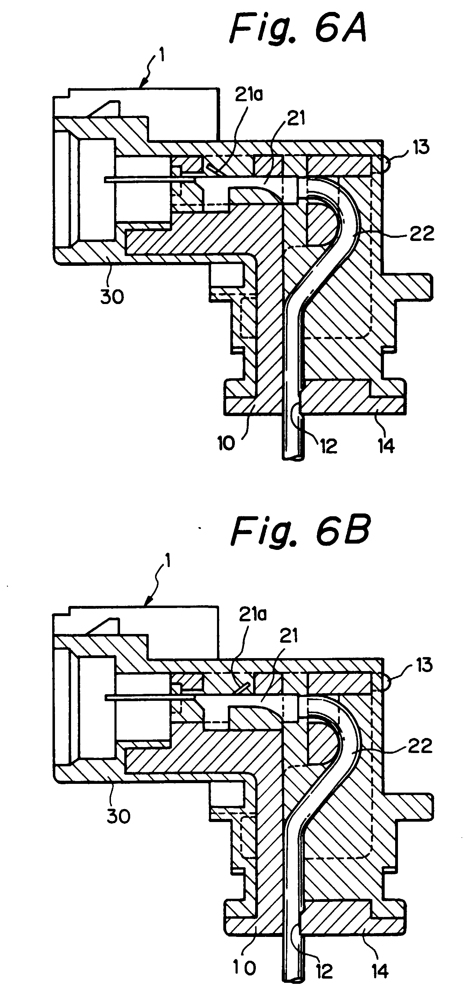

Referring now to FIGURES 1 through 6A and 6B, an embodiment of a method for producing an electric wire insert in accordance with the present invention will be explained below.

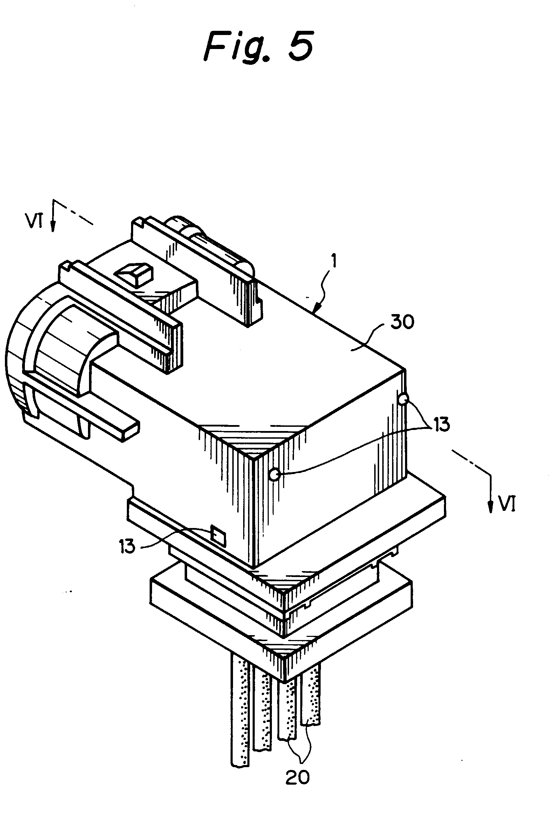

An embodiment is described herein in which four terminal-pressed electric wires disposed in parallel with each other are bent by 90° in the vicinity of a terminal and are molded in a resin material from a rear end of the terminal to the bent portion of the electric wire as shown in FIGURE 5.

A primary product 10 for setting electric wires 22, shown in FIGURES 1 and 2, is formed from the same resin material as that of a secondary product.

The primary product 10 is provided with terminal receiving apertures 11 and wire through bores 12. As shown in FIGURES 1 and 2, the axes of the apertures 11 is perpendicular to the axes of the bores 12. Terminal locking openings Ila are formed above the terminal receiving apertures 11. The internal diameter of the wire through bores 12 is slightly smaller than the diameter of the electric wire 22.

The primary product 10 is also provided with support projections 13 on the exterior thereof.

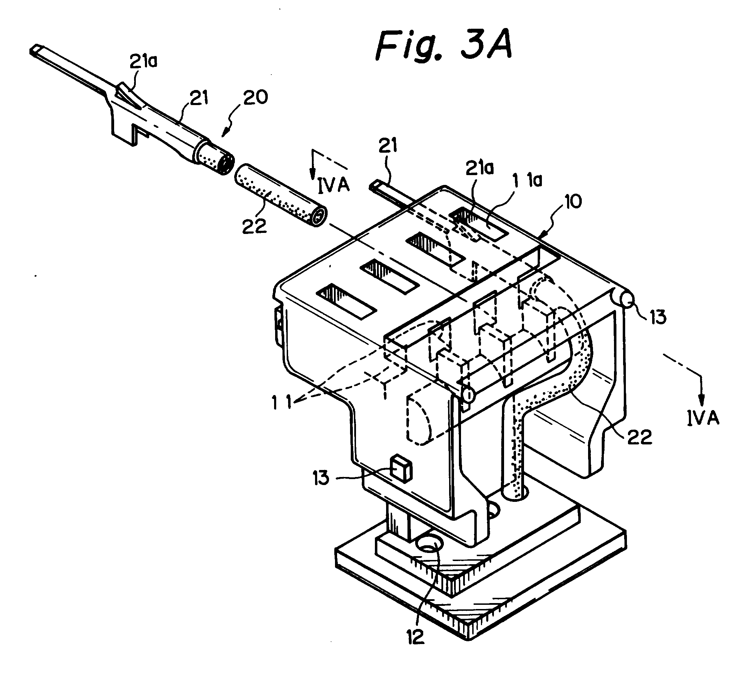

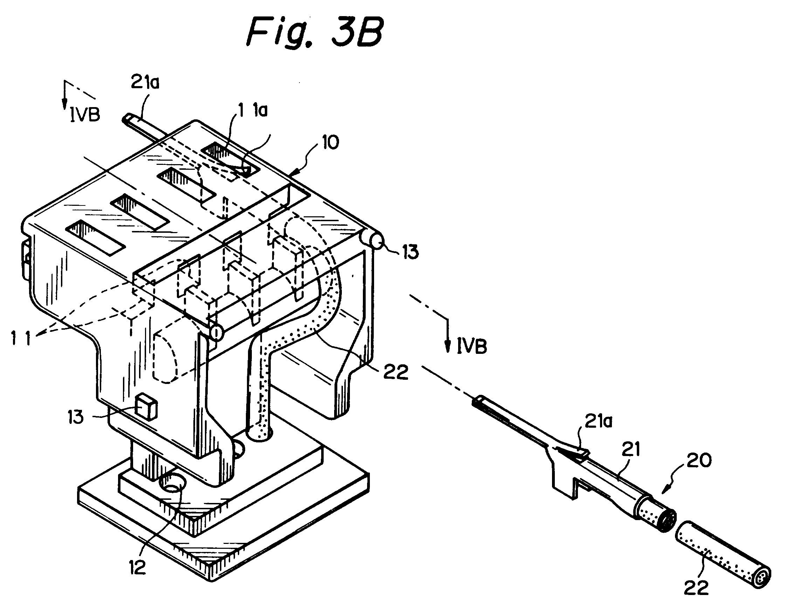

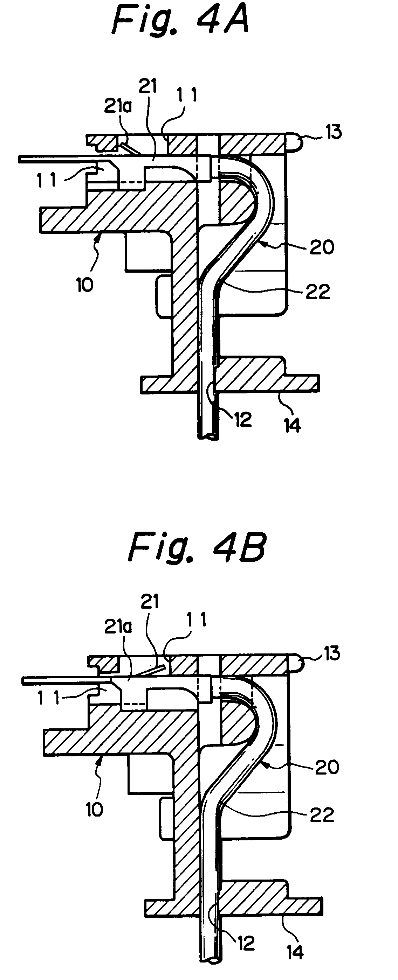

As shown in FIGURES 3A and 4A, the electric wire 22 of the terminal pressed wire 20 is inserted into the terminal receiving aperture 11 so that a rear end of a terminal 21 is received in the aperture 11 and a protrusion 21a on the terminal 21 engages with the locking opening 11a. Alternately, as shown in FIGURES 3B and 4B, the electric wire 22 of the terminal pressed wire 20 is inserted into the terminal receiving aperture 11 so that a distal end of a terminal 21 is received in the aperture 11 and a protrusion 21a on the terminal 21 engages with the locking opening 11a The terminal pressed wire 20 is set in the primary product 10 by inserting the electric wire 22 through the bore 12 with the wire being compressed in the bore 12.

The primary product 10 with the terminal pressed wire 20 is set in the mold (not shown) so that a bottom surface 14, through which the electric wire 22 passes, finally becomes a part of the exterior of the resin-molded portion 1. At this time, it is not necessary to provide fixing pins in the mold, since the support projections 13 abut on the interior of the mold.

After secondary forming is finished by injecting a resin material into the mold, a secondary production having the resin-molded portion 1, in which a secondarily formed resin portion 30 covers with the primary product 10, is finally produced, as shown in FIGURES 5, 6A and 6B. The end face of the support projection 13 is exposed from the resin-molded portion 1, as shown in FIGURE 5.

In the method for producing the electric wire insert, the electric wires are set in compression in the primary product and the primary product with the electric wires is set in the mold with the wire-through face being exposed from the mold. Accordingly, the electric wires do not come into contact with the mold and are not subject to cracks or other damage due to biting of the split type of mold or molding fins.

Thus, it is possible to completely prevent the production of defective goods by carrying out correction after setting the electric wires in the primary product.

In addition, the primary product is disposed in position by contacting the support projections of the primary production with the interior of the mold. The pins for fixing the primary product in the mold are not required and a part of the primary product becomes a part of the secondary product having the resin-molded portion. There is no pin-drawn out hole in the secondary product.

The process of setting the primary product in the mold can be automatically effected by a robot as a result of utilizing the primary product. Consequently, it is possible to improve a working operation.

## Claims

1. A method of producing an electric wire insert (1) in which at least one electric wire (22) is located in a primary product (10) with support projections (13) round which is formed a resin-molded secondary portion (30), characterised in that the method comprises the steps of:
forming the primary product (10) with the support projections (13) and a respective through bore (12) adapted to hold each electric wire (22), the outer end of each bore (12) being in an external surface (14) of the primary product (10);
inserting the or each wire (22) into a respective through bore (12) to hold the wire (22) firmly, with the wire (22) extending from the primary product (10) away from the external surface (14);
setting the primary product (10) and the or each wire (22) into a mold with the external surface (14) containing the outer end of the or each bore (12) being exposed from the mold and with the support projections (13) engaging the mold; and
forming the secondary portion (30) by injecting resin into the mold.

2. The method according to claim 1, in which the step of forming the primary product (10) includes forming a terminal receiving through aperture (11) for location of a terminal (21) of a respective wire (22) and a locking opening (11a) for each through aperture (11), and the method includes the further step of inserting a terminal (21) of each wire (22) into a respective through aperture (11) in the primary product (10) until it is locked by the engagement of a protrusion (21a) on the terminal (21) with the locking opening (11a), to locate the terminal (21) firmly during forming of the secondary portion (30).

3. An electric wire insert (1) comprising at least one electric wire (22) located in a resin-molded body formed by a primary product (10) round which is resin-molded a secondary portion (30), characterised in that the primary product (10) has support projections (13) and a respective through bore (12) for each electric wire (22), each electric wire (22) having been inserted in the preformed respective through bore (12) and being held firmly, the outer end of each through bore (12), from which the wire extends, being in an external surface (14) of the primary product (10), the secondary portion (30) having been resin-molded round the primary product (10) excluding the external surface (14) and the or each wire (22) extending from the external surface (14).

4. An electric wire insert according to claim 3, in which each through bore (12) is dimensioned so as to hold the respective wire (22) closely.

5. An electric wire insert according to claim 3 or claim 4, in which the primary product (10) has a terminal receiving through aperture (11) for location of a terminal (21) of a respective wire (22).

6. An electric wire insert according to claim 5, in which each aperture (11) has a locking opening (11a) for receiving a protrusion (21a) of the terminal (21), the engagement of the protrusion (21a) in the locking opening (11a) holding the terminal (21) firmly in the primary product (10).

## Patentansprüche

1. Verfahren zur Herstellung eines Stromkabeleinbetteils (1), bei dem mindestens ein Stromkabel (22) in einem primären Produkt (10) mit Haltevorsprüngen (13) positioniert wird, um welches herum ein sekundäres Harzformteil (30) geformt wird,
dadurch gekennzeichnet, daß das Verfahren die Schritte umfaßt:
Formen des primären Produkts (10) mit den Haltevorsprüngen (13) und einer jeweiligen, zum Halten jedes Stromkabels (22) angepaßten Durchgangsbohrung (12), wobei das äußere Ende jeder Bohrung (12) in einer äußeren Oberfläche (14) des primären Produkts (10) liegt;
Einführen des oder jedes Kabels (22) in eine jeweilige Durchgangsbohrung (12), um das Kabel (22) fest zu halten, wobei sich das Kabel (22) weg von der äußeren Oberfläche (14) aus dem primären Produkt (10) erstreckt;
Einsetzen des primären Produkts (10) und des oder jedes Kabels (22) in eine Form, wobei die das äußere Ende des oder jeder Bohrung (12) enthaltende äußere Oberfläche (14) aus der Form freiliegt, und wobei die Haltevorsprünge (13) mit der Form im Eingriff stehen; und
Formen des sekundären Teils (30) durch Einspritzen von Harz in die Form.

2. Verfahren nach Anspruch 1, dadurch gekennzeichnet, daß der Schritt eines Formens des primären Produkts (10) das Formen einer Endabschlußaufnahmedurchgangsöffnung (11) zur Positionierung eines Endabschlusses (21) eines jeweiligen Kabels (22) und einer Arretieröffnung (11a) für jede Durchgangsöffnung (11) einschließt, und das Verfahren den weiteren Schritt eines Einführens eines Endabschlusses (21) jedes Kabels (22) in eine jeweilige Durchgangsöffnung (11) im primären Produkt (10) einschließt, bis es durch den Eingriff eines Vorsprungs (21a) auf dem Endabschluß (21) mit der Arretieröffnung (11a) arretiert wird, um den Endabschluß (21) während des Formens des sekundären Teils (30) fest zu positionieren.

3. Stromkabeleinbetteil (1) umfassend mindestens ein Stromkabel (22), das in einem Harzformkörper positioniert ist, welcher von einem primären Produkt (10), um das herum ein sekundärer Teil (30) aus Harz geformt ist, gebildet wird, dadurch gekennzeichnet, daß das primäre Produkt (10) Haltevorsprünge (13) und eine jeweilige Durchgangsbohrung (12) für jedes Stromkabel (22) aufweist, wobei jedes Stromkabel (22) in die vorgeformte jeweilige Durchgangsbohrung (12) eingeführt worden ist und fest gehalten wird, wobei das äußere Ende jeder Durchgangsbohrung (12), aus dem sich das Kabel erstreckt, in einer äußeren Oberfläche (14) des primären Produkts (10) liegt, wobei der sekundäre Teil (30) unter Ausschluß der äußeren Oberfläche (14) und des oder jedes sich aus der äußeren Oberfläche (14) erstreckenden Kabels (22) um das primäre Produkt (10) herum aus Harz geformt worden ist.

4. Stromkabeleinbetteil nach Anspruch 3, dadurch gekennzeichnet, daß jede Durchgangsbohrung (12) so bemessen ist, daß sie das jeweilige Kabel (22) eng anliegend hält.

5. Stromkabeleinbetteil nach Anspruch 3 oder Anspruch 4, dadurch gekennzeichnet, daß das primäre Produkt (10) eine Endabschlußaufnahmedurchgangsöffnung (11) zur Positionierung eines Endabschlusses (21) eines jeweiligen Kabels (22) aufweist.

6. Stromkabeleinbetteil nach Anspruch 5, dadurch gekennzeichnet, daß jede Öffnung (11) eine Arretieröffnung (11a) zur Aufnahme eines Vorsprungs (21a) des Endabschlusses (21) aufweist, wobei der Eingriff des Vorsprungs (21a) in der Arretieröffnung (11a) den Endabschluß (21) im primären Produkt (10) fest hält.

## Revendications

1. Procédé de fabrication d'un insert de fil électrique (1) où au moins un fil électrique (22) est situé dans un premier produit (10) avec des saillies de support (13) autour desquelles est formée une deuxième partie moulée en résine (30), caractérisé en ce que le procédé comporte les étapes consistant à :
réaliser le premier produit (10) avec les saillies de support (13) et un trou traversant respectif (12) apte à retenir chaque fil électrique (22), l'extrémité extérieure de chaque perçage (12) se trouvant dans une surface extérieure (14) du premier produit (10);
insérer le ou chaque fil (22) dans un trou traversant respectif (12) pour tenir le fil (22) solidement, le fil (22) s'étendant du premier produit (10) au loin de la surface extérieure (14);
placer le premier produit (10) et le ou chaque fil (22) dans un moule, la surface extérieure (14) contenant l'extrémité extérieure du ou de chaque perçage (12) étant exposée du moule et les saillies de support (13) étant mises en prise avec le moule; et
former la deuxième partie (30) en injectant de la résine dans le moule.

2. Procédé selon la revendication 1, où l'étape consistant à former le premier produit (10) comporte la réalisation d'une ouverture traversante (11) recevant une borne en vue de la localisation d'une borne (21) d'un fil respectif (22) et une ouverture de verrouillage (11a) pour chaque ouverture traversante (11), et le procédé comporte l'étape ultérieure consistant à insérer une borne (21) de chaque fil (22) dans un trou traversant respectif (11) dans le premier produit (10) jusqu'à ce qu'il soit bloqué par la mise en prise d'une saillie (21a) sur la borne (21) avec l'ouverture de verrouillage (11a) pour situer la borne (21) solidement pendant la formation de la deuxième partie (30).

3. Insert de fil électrique (1) comportant au moins un fil électrique (22) situé dans un corps moulé en résine formé par un premier produit (10) autour duquel est moulé en résine une deuxième partie (30), caractérisé en ce que le premier produit (10) a des saillies de support (13) et un trou traversant respectif (12) pour chaque fil électrique (22), chaque fil électrique (22) ayant été inséré dans le trou traversant respectif préformé (12) et étant retenu solidement, l'extrémité extérieure de chaque trou traversant (12), de laquelle le fil s'étend, se situant dans une surface extérieure (14) du premier produit (10), la deuxième partie (30) ayant été moulée en résine autour du premier produit (10) en excluant la surface extérieure (14) et le ou chaque fil (22) s'étendant de la surface extérieure (14).

4. Insert de fil électrique selon la revendication 3, où chaque trou traversant (12) est dimensionné de façon à retenir le fil respectif (22) de manière serrée.

5. Insert de fil électrique selon la revendication 3 ou la revendication 4, où le premier produit (10) a une ouverture traversante (11) de réception de borne pour la localisation d'une borne (21) d'un fil respectif (22).

6. Insert de fil électrique selon la revendication 5, où chaque orifice (11) a une ouverture de verrouillage (11a) pour recevoir une saillie (21a) de la borne (21), la mise en prise de la saillie (21a) dans l'ouverture de verrouillage (11a) retenant la borne (21) fermement dans le produit primaire (10).
